# EUROPEAN PATENT APPLICATION

(11) **EP 1 710 791 A2**
(43) Date of publication of application: **11.10.2006**
(21) Application number: 05252170.5
(22) Date of filing: 07.04.2005
(51) Int. Cl.: G11B 7/007, G11B 7/125

(54) **Optical recording medium, method of recording/reproducing data on/from optical recording medium, and apparaus for recording/reproducing data on/from optical recording medium**

(30) Priority: 07.04.2005 KR 2004029589
(71) Applicant: SAMSUNG ELECTRONICS CO. LTD., Suwon-city, Kyounggi-do 441-742 (KR)
(72) Inventor: Lee, Kyung-geun 229-1006 Sibwomdanji Woosung Apt., Seongnam-si, Gyeonggi-do (KR); Hwang, Wook-Yeon, Gyeonggi-do (KR)
(74) Representative: Davies, Robert Ean

(57) **Abstract**

An optical recording medium (50), a method of recording/reproducing data on/from an optical recording medium, and an apparatus for recording/reproducing data on/from an optical recording medium are provided to enable optimum recording/reproducing conditions for the optical recording medium to be quickly determined. The optical recording medium includes a reference signal area (56), in which reference signals are recorded based on optimum recording conditions determined for optimally recording/reproducing data on/from the optical recording medium. Accordingly, once reference signals are recorded in a predetermined portion of a lead-in (51) or lead-out area (53) of an optical recording medium when the optical recording medium is loaded in a disc drive for the first time, optimum recording/reproducing conditions for the optical recording medium can be quickly determined later on without the need to additionally perform optimum power control (OPC).

## Description

The present invention relates to an optical recording medium, and more particularly, but not exclusively, to a method of recording/reproducing data on/from an optical recording medium and an apparatus for recording/reproducing data on/from an optical recording medium.

In general, optical storage media, such as optical discs, are widely used in an optical pickup apparatus, which records data on or reproduces data from the optical data storage media without physically contacting the optical data storage media. Optical discs are classified into compact discs (CDs) or digital versatile discs (DVDs) according to their storage capacities. Examples of an optical disc, on which data can be recorded and from which data can be erased and reproduced, include a 650 MB CD-R, a CD-rewritable (RW), a 4.7 GB DVD+R/RW, a DVD-random access memory (RAM), and a DVD-R/RW. Examples of an optical disc, from which data cannot be erased but can only be reproduced, include a 650 MB CD and a 4.7 GB DVD-ROM. Development of high density (HD) DVDs or Blu-ray (BD) discs with a storage capacity of at least 15 GB is almost accomplished, and development of super-resolution near-field structure (super RENS) discs or hologram discs with an even higher storage capacity than HD DVDs or BD discs is now under way.

An apparatus for recording/reproducing data on/from an optical disc, such as a disk drive or the like, records data on an optical disc by applying a high energy light beam on the optical disc such that the physical characteristics of a recording layer of the optical disc can change, and reproduces data from the optical disc by applying a light beam whose energy is not high enough to cause the physical characteristics of the recording layer of the optical disc to change to the optical disc. In other words, when recording data on the optical disc, a laser diode included in such an apparatus is driven with such a high recording power that pits can be formed on the optical disc. Formation of pits with predetermined lengths on the optical disc is called write strategy.

An apparatus for recording/reproducing data on/from an optical disc performs optimum power control (OPC) to determine an optimum power for recording data on an optical disc, such as a CD-R/RW. Thus, a power calibration area (PCA), which contains information, may be defined in a lead-in area of the optical disc to determine an optimum recording power for the optical disc.

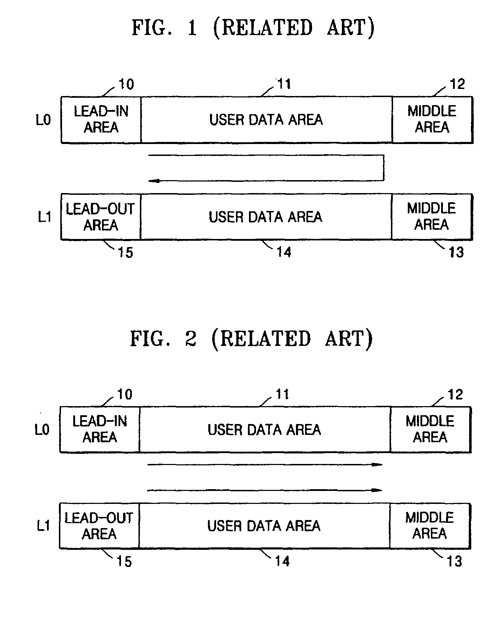

The structure of a conventional optical recording medium will be described more fully with reference to FIG. 1, FIG. 2 and FIG. 3 as follows.

FIG. 1 is a diagram illustrating a conventional double recording layered opposite track path (OTP) optical recording medium useful in gaining a more thorough appreciation of the present invention. Referring to FIG. 1, the conventional double recording layered OTP optical recording medium comprises two recording layers, i.e., first and second recording layers L0 and L1. The first recording layer L0 includes a lead-in area 10, a user data area 11, and a middle area 12. The second recording layer L1 includes a middle area 13, a user data area 14, and a lead-out area 15. Data is recorded on the conventional double recording layered OTP optical recording medium in an opposite track path (OTP) manner. Specifically, data is recorded on the first recording layer L0 from an inner circumferential portion to outer circumferential portion of the first recording layer L0, and on the second recording layer L1 from an outer circumferential portion to inner circumferential portion of the second recording layer L1.

FIG. 2 is a diagram illustrating a conventional double recording layered parallel track path (PTP) optical recording medium useful in gaining a more thorough appreciation of the present invention. Referring to FIG. 2, the conventional double recording layered PTP optical recording medium comprises two recording layers, i.e., first and second recording layers L0 and L1. The first recording layer L0 includes a lead-in area 10, a user data area 11, and a middle area 12. The second recording layer L1 includes a middle area 13, a user data area 14, and a lead-out area 15. Data is recorded on the conventional double recording layered PTP optical recording medium in a parallel track path (PTP) manner. Specifically, a direction in which data is recorded on the first recording layer L0 is the same as a direction in which data is recorded on the second recording layer L1.

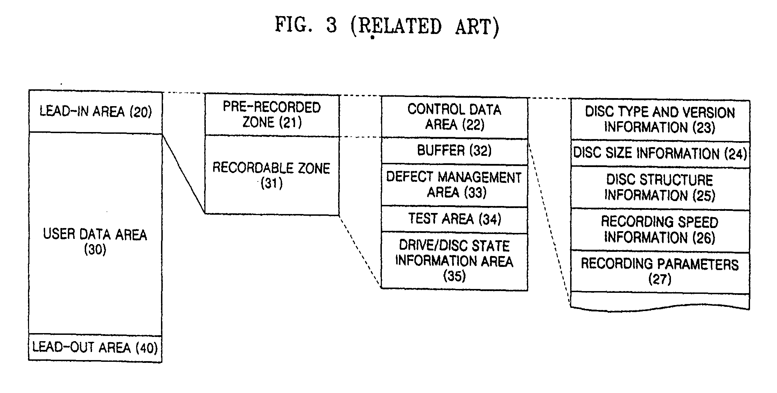

FIG. 3 is a diagram illustrating the structure of a lead-in area of a conventional optical recording medium. Referring to FIG. 3, the conventional optical recording medium includes a lead-in area 20, which is located near the inner circumference of the conventional optical recording medium, a lead-out area 40, which is located near the outer circumference of the conventional optical recording medium, and a user data area 30, which is located between the lead-in and lead-out areas 20 and 40 and in which user data is recorded.

The lead-in area 20 contains a pre-recorded zone 21, on which predetermined data has already been written and from which the predetermined data cannot be erased but can only be reproduced, and a recordable zone 31, on which data can be written or overwritten and from which data can also be erased.

The pre-recorded zone 21 is only reproducible and serves as a control data area 22, in which control data is recorded. The control data includes disc type and version information 23, disc size information 24, disc structure information 25, recording speed information 26, and recording parameters 27.

The recordable zone 31 includes a buffer area 32, a defect management area (DMA) 33, a test area 34, a drive/disc state information area 35.

The buffer area 32 serves as a buffer between the pre-recorded zone 21 and the recordable zone 31. The DMA 33 stores defect management information, which is information on defects that have occurred in the user data area 30. The test area 34 is an area tested for determining an optimum recording power. The test area 34 is also called a power calibration area (PCA). The drive/disc state information area 35 stores state information on a drive or the conventional optical recording medium.

As described above, a PCA is provided for determining an optimum recording condition, i.e., an optimum recording power. An apparatus for recording/reproducing data on/from an optical recording medium, such as a disk drive or the like, spends a long time to determine optimum recording/reproducing conditions for an optical recording medium. This is because such an apparatus must sequentially apply various sets of recording/reproducing conditions to the optical recording medium, and then determine one of the various sets of recording/reproducing conditions as the optimum recording/reproducing conditions for the optical recording medium. Thus, the optimum recording/reproducing conditions are highly dependent upon the characteristics of the optical recording medium and the apparatus for recording/reproducing data on/from an optical recording medium. In addition, the optimum recording/reproducing conditions are also highly dependent upon focusing position, tracking position, and gain, which are determining factors for the success of various servo operations, and equalization characteristics and a binary slice level, which are reproduce signal processing conditions.

Therefore, whenever activated, the apparatus for recording/reproducing data on/from an optical recording medium changes recording/reproducing conditions, such as pulse conditions, servo conditions, and reproduce signal processing conditions and then test-records data on an optical recording medium. The quality of signals reproduced from the optical recording medium is compared with the quality of reference signals so as to determine optimum recording/reproducing conditions. Thereafter, data is recorded on the optical recording medium under the optimum recording/reproducing conditions. As a result, an operation of determining the optimum recording/reproducing conditions must be always performed before the apparatus for recording/reproducing data on/from an optical recording medium, such as a disc drive or the like, records/reproduces data on/from the optical recording medium, which undesirably increases the total standby time of the apparatus for recording/reproducing data on/from an optical recording medium.

In addition, if the optical recording medium is comprised of a plurality of storage layers, optimum recording/reproducing conditions must be determined for each of the storage layers by test-recording data in a test area on each of the plurality of storage layers. As a result, the amount of time spent by the apparatus for recording/reproducing data on/from an optical recording medium to determine optimum recording/reproducing conditions may be proportional to the number of storage layers of the optical recording medium. For example, the amount of time spent by the apparatus for recording/reproducing data on/from an optical recording medium to determine optimum recording/reproducing conditions for the optical recording medium comprised of the plurality of storage layers is greater than that used to determine optimum recording/reproducing conditions for an optical recording medium comprised of a single storage layer. Therefore, a user must wait for a long time before an apparatus for recording/reproducing data on/from an optical recording medium, such as a disc drive or the like, records user data on the optical recording medium comprised of the plurality of recording layers.

Moreover, in a case where an apparatus for recording/reproducing data on/from an optical recording medium can only reproduce data from an optical recording medium, for example, when such an optical recording medium is a write once disc that has already been finalized, or when such an optical recording medium is write-protected, it is still necessary to determine optimum reproducing conditions for the optical recording medium through equalization frequency control, gain control, or focusing control.

Embodiments of the present invention advantageously provide an optical recording medium, a method of recording/reproducing data on/from an optical recording medium, and an apparatus for recording/reproducing data on/from an optical recording medium, such as a disc drive or the like, which can minimize or at least reduce a total standby time, which is the time required for such an apparatus to get ready to record user data on the optical recording medium, by quickly determining optimum recording/reproducing conditions for the optical recording medium.

According to an aspect of the present invention, an optical recording medium is provided with a data area; and a reference signal area, in which reference signals are recorded based on optimum recording conditions determined for optimally recording/reproducing data on/from the optical recording medium.

The reference signals may satisfy predetermined amplitude modulation conditions and/or satisfy predetermined jitter conditions. The reference signal area may be arranged in a recordable area of a lead-in area or a lead-out area on the optical recording medium.

The optical recording medium may also include one or more recording layers, in which case, the reference signal area is arranged on each of the recording layers, and the reference signals are recorded in the reference signal area on each of the recording layers based on optimum recording conditions determined for a corresponding recording layer.

The reference signals may be recorded on the optical recording medium by an apparatus for recording/reproducing data on/from an optical recording medium, such as a disc drive, in which the optical recording medium is loaded for the first time.

According to another aspect of the present invention, a method of recording data on an optical recording medium is provided, including recording reference signals in a recordable area of the optical recording medium based on optimum recording conditions determined for optimally recording/reproducing data on/from the optical recording medium.

During the recording of the reference signals, the reference signals may satisfy predetermined amplitude modulation conditions and/or satisfy predetermined jitter conditions. The reference signal area may be arranged in a recordable area of a lead-in area or a lead-out area on the optical recording medium.

During the recording of the reference signals, if the optical recording medium is comprised of one or more recording layers, the reference signals may be recorded on each of the recording layers based on optimum recording conditions determined for a corresponding recording layer.

The reference signals may also be recorded on the optical recording medium by an apparatus for recording/reproducing data on/from an optical recording medium, such as a disc drive, in which the optical recording medium is loaded for the first time therein.

According to another aspect of the present invention, a method of recording/reproducing data on/from an optical recording medium includes: reading reference signals from a reference signal area defined on an optical recording medium, the reference signals being recorded in the reference signal area based on optimum recording conditions determined for optimally recording/reproducing data on/from the optical recording medium; determining the optimum recording/reproducing conditions for the optimum recording medium based on the read reference signals; and recording/reproducing data on/from the optical recording medium under the determined optimum recording/reproducing conditions.

If the optical recording medium is comprised of one or more recording layers, the reference signals may be read from a reference signal area defined on each of the recording layers, optimum recording/reproducing conditions for each of the recording layers may be determined based on the reference signals read out from a corresponding recording layer, and data may be recorded/reproduced on/from each of the recording layers under the optimum recording/reproducing conditions for the corresponding recording layer.

According to another aspect of the present invention, a method of recording/reproducing data on/from an optical recording medium includes: determining whether reference signals are recorded in a reference signal area arranged on an optical recording medium; recording reference signals in the reference signal area under optimum recording/reproducing conditions determined for optimally recording/reproducing data on/from the optical recording medium, if no reference signals are recorded in the reference signal area; and reading the reference signals from the reference signal area, determining the optimum recording/reproducing conditions for the optical recording medium based on the reference signals, and recording/reproducing data on/from the optical recording medium under the determined optimum recording/reproducing conditions, if reference signals are recorded in the reference signal area.

According to another aspect of the present invention, an apparatus for recording data on an optical recording medium is provided with a writer which records data on the optical recording medium; and a controller which controls the writer to record reference signals in a recordable area of the optical recording medium under optimum recording conditions determined for optimally recording/reproducing data on/from the optical recording medium.

The controller may control the writer to record the reference signals satisfying predetermined amplitude modulation conditions in the recordable area of the optical recording medium.

The controller may also control the writer to record the reference signals satisfying predetermined jitter conditions in the recordable area of the optical recording medium.

The controller may control the writer to record the reference signals in a recordable area of a lead-in or lead-out area defined on the optical recording medium.

If the optical recording medium is comprised of one or more recording layers, the controller may control the writer to record the reference signals on each of the recording layers under optimum recording conditions determined for a corresponding recording layer.

According to yet another aspect of the present invention, an apparatus for recording/reproducing data on/from an optical recording medium is provided with a reader/writer unit which records/reproduces data on/from the optical recording medium; and a controller which controls the reader/writer unit to read reference signals from a recordable area of the optical recording medium, to determine optimum recording/reproducing conditions for the optical recording medium based on the read reference signals, and to record/reproduce data on/from the optical recording medium under the determined optimum recording/reproducing conditions. If the optical recording medium is comprised of one or more recording layers, the controller may control the writer to read the reference signals from a reference signal area arranged on each of the recording layers, to determine optimum recording/reproducing conditions determined for a corresponding recording layer, and to record/reproduce data on/from the corresponding recording layer under the determined optimum recording/reproducing conditions.

According to another aspect of the present invention, an apparatus for recording/reproducing data on/from an optical recording medium is provided with a reader/writer unit which records/reproduces data on/from the optical recording medium; and a controller which determines whether reference signals are recorded in a reference signal area defined on an optical recording medium. The controller controls the reader/writer unit to record reference signals in the reference signal area under optimum recording/reproducing conditions determined for the optical recording medium, if no reference signals are recorded in the reference signal area. In addition, the controller also determines the optimum recording/reproducing conditions for the optical recording medium based on the reference signals read out from the reference signal area, and controls the reader/writer unit to record/reproduce data on/from the optical recording medium under the determined optimum recording/reproducing conditions, if reference signals are recorded in the reference signal area.

According to yet another aspect of the present invention, a system is provided with a storage medium having a data area and a reference signal area; and a disk drive arranged to determine whether reference signals are recorded in the reference signal area defined on the storage medium, and, if the reference signals are recorded in the reference signal area, determine optimum recording/reproducing conditions based on the reference signals and then record/reproduce data on/from the data area on the storage medium under determined optimum recording/reproducing conditions. If the reference signals are not recorded in the reference signal area defined on the storage medium, the disk drive is further arranged to determine optimum recording/reproducing conditions by test recording test data in a test area on the optical recording medium under a set of recording/reproducing conditions, and to record reference signals in the reference signal area on the optical recording medium under determined optimum recording/reproducing conditions, prior to recording/reproducing data on/from the data area on the storage medium.

The reference signal area may be provided in one of a lead-in area and a lead-out area arranged at either side of the data area, on the storage medium. In addition, the reference signals may be recorded in the reference signal area in one of a random pattern and a unique pattern, satisfying predetermined amplitude modulation conditions and/or predetermined jitter conditions.

Additional aspects and/or advantages of the invention will be set forth in part in the description which follows and, in part, will be obvious from the description, or may be learned by practice of the invention.

A better understanding of the present invention will become apparent from the following detailed description of example embodiments and the claims when read in connection with the accompanying drawings, all forming a part of the disclosure of this invention. While the following written and illustrated disclosure focuses on disclosing example embodiments of the invention, it should be clearly understood that the same is by way of illustration and example only and that the invention is not limited thereto. The spirit and scope of the present invention are limited only by the terms of the appended claims. The following represents brief descriptions of the drawings, wherein:
FIG. 1 is a diagram illustrating a conventional double recording layered OTP optical recording medium useful in gaining a more thorough appreciation of the present invention;
FIG. 2 is a diagram illustrating a conventional double recording layered PTP optical recording medium useful in gaining a more thorough appreciation of the present invention;
FIG. 3 is a diagram illustrating the structure of a lead-in area of a conventional optical recording medium useful in gaining a more thorough appreciation of the present invention;
FIG. 4 is a diagram illustrating a process of determining optical recording/reproducing conditions for an optical recording medium according to an embodiment of the present invention;
FIG. 5 is a diagram illustrating an example single recording layered optical recording medium according to an embodiment of the present invention;
FIG. 6 is a diagram illustrating an example double recording layered optical recording medium according to an embodiment of the present invention;
FIG. 7 is a block diagram of an example apparatus for recording/reproducing data on/from an optical recording medium according to an embodiment of the present invention; and
FIG. 8 is a flowchart of a method of recording/reproducing data on/from an optical recording medium according to an embodiment of the present invention.

The present invention will now be described more fully with reference to the accompanying drawings, in which example embodiments of the invention are shown.

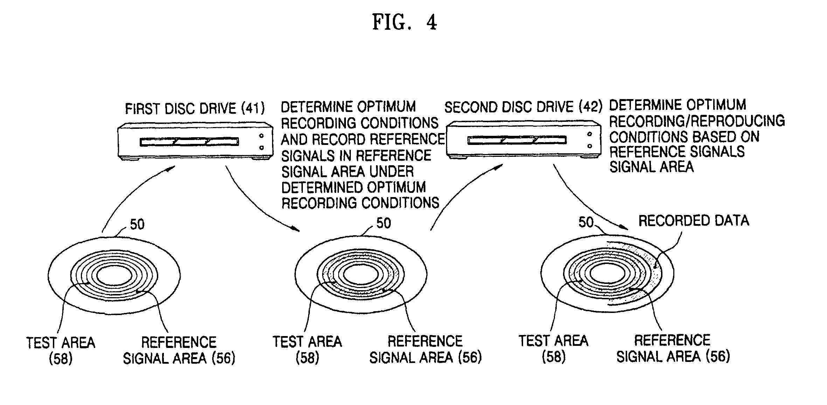

FIG. 4 is a diagram illustrating a process of determining optimum recording/reproducing conditions for an optical recording medium, i.e., an optical disc 50 according to an embodiment of the present invention. Referring to FIG. 4, an optical recording medium may be an optical disc 50, and the process may require multiple apparatus for recording/reproducing data on/from an optical recording medium, such as first and second disc drives 41 and 42, to determine optimum recording/reproducing conditions for optimally recording/reproducing data on/from an optical disc 50. For example, a first disc drive 41 may be used to determine optimum recording conditions for an optical disc 50 and to record reference data on the optical disc 50 under the determined optimum recording conditions, if the optical disc 50 has never been used. A second disc drive 41 may then be used to determine optimum recording/reproducing conditions based on the reference data previously recorded on the optical disc 50.

Specifically, the optical disc 50, as shown in FIG. 4, includes a lead-in area, which is comprised of a test area 58 and a reference signal area 56. The test area 58 is an area provided for a test of determining optimum recording/reproducing conditions, with which a first disc drive 41 can optimally record data on the optical disc 50 loaded therein. The reference signal area 56 is an area, in which reference data is recorded under the optimum recording/reproducing conditions.

Supposing that the optical disc 50 has never been used, the optical disc 50 is loaded in the first disc drive 41. The disc drive 41 records data in the test area 58 on the optical disc 50, while applying various sets of recording conditions, and then determines optimum recording conditions for the optical disc 60. Thereafter, the first disc drive 41 records the reference data in the reference signal area 56 on the optical disc 50 under the optimum recording conditions.

Thereafter, if the optical disc 50, on which the reference data has been recorded under the optimum recording conditions, is loaded in a second disc drive 42, the second disc drive 42 reproduces the reference data from the optical disc 50, determines optimum recording/reproducing conditions for the optical disc 50 based on the reference data, and records/reproduces data on/from the optical disc 50 under the optimum recording/reproducing conditions, such as pulse conditions, servo conditions, and reproduce signal processing conditions.

As described with reference to FIG. 4, only the first disc drive 41, in which the optical disc 50 is loaded for the first time, performs optimum power control (OPC), thereby determining optimum recording/reproducing conditions for the optical disc 50. Thereafter, the first disc drive 41 records reference data in the reference signal area 56 on the optical disc 50 under the optimum recording/reproducing conditions. Then, the second disc drive 42 obtains the optical recording/reproducing conditions for the optical disc 50 by simply reading the reference data from the reference signal area 56 on the optical disc 50 without the need to test-record data in the test area 58 on the optical disc 50. Thus, the second disc drive 42 or another disc drive can advantageously reduce the time required to determine the optical recording/reproducing conditions for the optical disc 50 quite considerably.

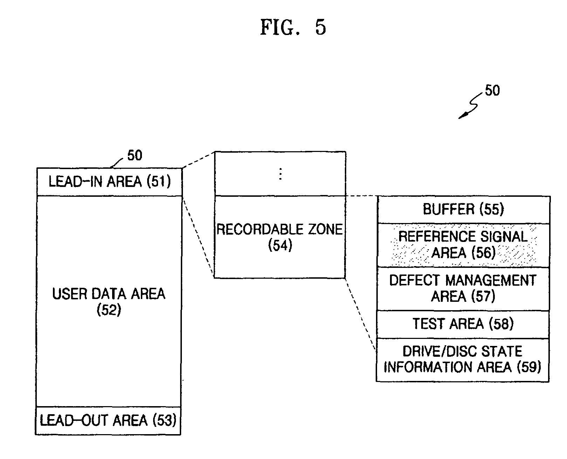

Turning now to FIG. 5, an example single recording layered optical recording medium for use as an optical disc 50 according to an embodiment of the present invention is illustrated. Referring to FIG. 5, the single recording layered optical recording medium 50 includes a lead-in area 51, a user data area 52, and a lead-out area 53.

The lead-in area 51 includes a recordable zone 54. The recording zone 54 includes a buffer area 55, a reference signal area 56, a defect management area 57, a test area 58, and a drive/disc state information area 59.

The structure of the single recording layered optical recording medium 50 is similar to the structure of the conventional double recording layered PTP optical recording medium, shown in FIG. 3, except that the reference signal area 56 is provided in the recordable zone 54 of the lead-in area 51 of the single recording layered optical recording medium 50. Here, in the reference signal area 56, reference signals are recorded under optimum recording conditions, which are determined by test-recording data in the test area 58 under various sets of recording conditions. The reference signal area 56 may be defined in the lead-out area 53.

The reference signals recorded in the reference signal area 56 are useful for setting equalization conditions, servo conditions, binary conditions, and pulse conditions for optimum recording/reproducing conditions.

Preferably, but not necessarily, the reference signals are recorded on the single recording layered optical recording medium 50, when the single recording layered optical recording medium 50 is loaded in a disc drive for the first time. Preferably, but not necessarily, the reference signals satisfy at least one of the following three conditions. First, the reference signals should be recorded on the single recording layered optical recording medium 50 under optimum recording conditions, which are determined through optimum power control (OPC). Next, an amplitude modulation level of the reference signals should be higher than 0.3. Finally, the reference signals should have a jitter level lower than 7%. The reference signals may be recorded on the single recording layered optical recording medium 50 satisfying only one of the three conditions. In addition, the second or third condition can be satisfied by appropriately determining optimum recording conditions for the single recording layered optical recording medium 50.

Here, the reference signals may have a different amplitude modulation level and a different jitter level from those set forth herein, depending on the specifications of the single recording layered optical recording medium 50.

In addition, the reference signals are preferably, but not necessarily, recorded in the reference signal area 56 in a random pattern. However, for a specific purpose, such as measurement of the degree to which the amplitude of the reference signals is modulated, the reference signals may also be recorded in the reference signal area 56 in a unique pattern. For example, in the case of run length limited (RLL) (1-7) modulation, the reference signals may be recorded in the reference signal area 56 only using 2T and 8T, where "T" in 2T and 8T denotes the cycle of a reference clock. For specific purposes, such as "asymmetry measurement" in RLL(1,7) modulation, reference signals are recorded using 2T and 8T in the reference signal area 56. Reference signals recorded using 2T and 8T are reproduced therefrom, and, from the eye pattern consisting of 2T and 8T, "asymmetry" can be measured from the degree representing how far eye pattern of 2T is positioned from the center of eye pattern of 8T.

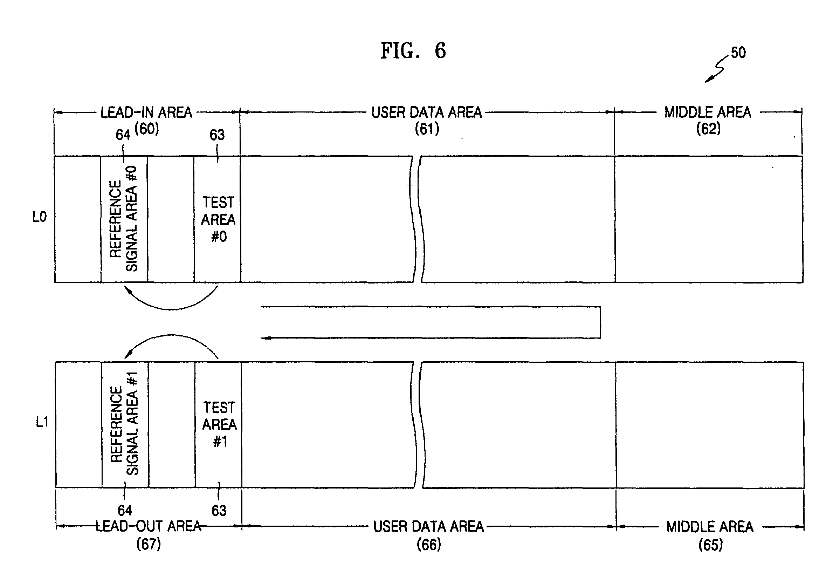

FIG. 6 is a diagram illustrating an example double recording layered optical recording medium for use as an optical disc 50 according to another embodiment of the present invention. Referring to FIG. 6, the double recording layered optical recording medium 50 includes two recording layers L0 and L1. In general, an optical recording medium comprised of a plurality of recording layers has different sets of optimum recording/reproducing conditions for the plurality of recording layers. Therefore, each of the recording layers L0 and L1 of the double recording layered optical recording medium 50 includes a reference signal area 64, in which reference signals are recorded under optimum recording conditions for a corresponding recording layer.

Specifically, the recording layer L0 includes a lead-in area 60, a user data area 61, and a middle area 62. Similarly, the recording layer L1 includes a middle area 65, a user data area 66, and a lead-out area 67. When the double recording layered optical recording medium 50 is loaded in a first apparatus for recording/reproducing data on/from an optical recording medium, such as a first disc drive 41, as shown, for example, in FIG. 4, for the first time, the first disc drive 41 determines optimum recording/reproducing conditions for the recording layer L0 by test-recording/test-reproducing data on/from test area #0 (63), which is defined in the lead-in area 60 on the recording layer L0, and then records reference signals in reference signal area #0 (64) under the optimum recording conditions for the recording layer L0. The first disc drive 41 also determines optimum recording/reproducing conditions for the recording layer L1 by test-recording/test-reproducing data on/from test area #1 (63), which is defined in the lead-out area 67 on the recording layer L1, and then records reference signals in reference signal area #1 (64) under the optimum recording conditions for the recording layer L1.

Thereafter, when the double recording layered optical recording medium 50 is loaded in a second apparatus for recording/reproducing data on/from an optical recording medium, such as a second disc drive 42, as shown, for example, in FIG. 4, the second disc drive 42 obtains the optimum recording/reproducing conditions for each of the recording layers L0 and L1 by reproducing the reference signals from each of reference signal areas #0 and #1 (63).

Reference signal areas may also be arranged in a middle area on each recording layer of an optical recording medium 50 having one or more recording layers.

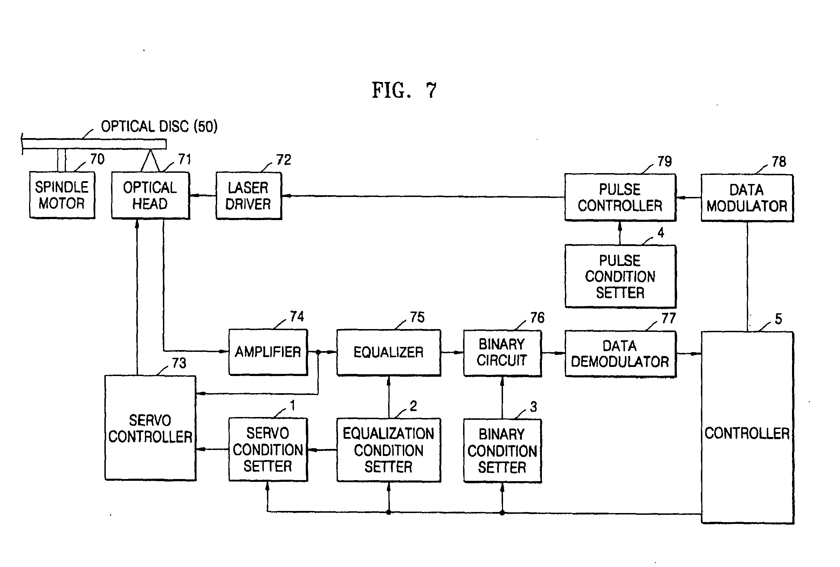

FIG. 7 is a block diagram of an apparatus for recording/reproducing data on/from an optical recording medium according to an embodiment of the present invention. Referring to FIG. 7, such an apparatus may represent either a first disc drive 41 or a second disc drive 42, shown in FIG. 4. Such an apparatus includes a spindle motor 70, an optical head 71, a laser driver 72, a servo controller 73, an amplifier 74, an equalizer 75, a binary circuit 76, a data demodulator 77, a data modulator 78, a pulse controller 79, and a controller 5. The apparatus further includes a recording/reproducing condition setting unit, which is comprised of a servo condition setter 1, an equalization condition setter 2, a binary condition setter 3, and a pulse condition setter 4.

The spindle motor 70 rotates an optical disc 50 loaded in the apparatus. The controller 5 controls the entire apparatus. The data modulator 78 converts data to be recorded on the optical disc 50 into a record signal. The pulse controller 79 controls the pulse of laser by following predetermined pulse conditions. The laser driver 72 drives a laser diode based on a signal output from the pulse controller 79. The optical head 71 having the laser diode records data on the optical disc 50, or generates a reproduce signal from a laser beam reflected from the surface of the optical disc 50 by focusing a laser beam on the optical disc 50 to generate a reproduce signal.

The servo controller 73 controls focusing and tracking operations of the optical head 71 based on a signal output from the amplifier 74 by following predetermined servo conditions. The amplifier 74 amplifies a signal output from the optical head 71. The equalizer 75 modifies the frequency characteristics of a reproduce signal output from the amplifier 74. The binary circuit 76 converts a signal output from the equalizer 75 into a binary signal. The data demodulator 77 demodulates binary data output from the binary circuit 76.

The servo condition setter 1 sets the predetermined servo conditions in the servo controller 73. The equalization condition setter 2 sets predetermined equalization conditions in the equalizer 75. The binary condition setter 3 sets a binary slice level in the binary circuit 76. The pulse condition setter unit 4 sets the predetermined pulse conditions in the pulse controller 79.

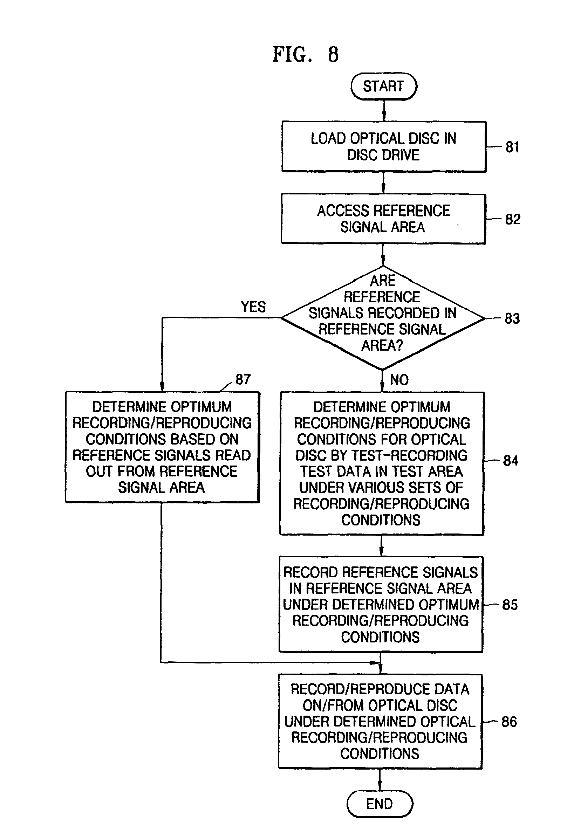

FIG. 8 is a flowchart of a method of recording/reproducing data on/from an optical recording medium according to an embodiment of the present invention. Referring to FIG. 8, in operation 81, an optical disc 50 is loaded in an apparatus for recording/reproducing data, such as a disc drive 41 or 42, shown in FIG. 4. Then, a spindle motor 70 of the disc drive rotates the optical disc 50, and then an optical head 71 of the disc drive applies a laser beam on the optical disc 50. Identification information of the optical disc 50, which is recorded in a lead-in area of the optical disc 50, as shown, for example, in FIG. 5 or FIG. 6, is read out when the optical head 71 accesses the lead-in area of the optical disc 50. The optical head 71 obtains a reproduce signal from a laser beam reflected from the optical disc 50. Thereafter, an amplifier 74 of the disc drive amplifies the reproduce signal, and an equalizer 75 of the disc driver, in which predetermined equalization conditions are set, modifies the frequency characteristics of the amplified reproduce signal. A binary circuit 76 of the disc drive, in which a predetermined binary slice level is set, converts the modification result output from the equalizer 75 into a binary signal. Thereafter, a data demodulator 77 of the disc drive demodulates the binary signal, and then transmits the demodulated binary signal to a servo controller 73 of the disc drive. The servo controller 73 controls focusing and tracking operations of the optical head 71 based on a signal output from the amplifier 74 by following predetermined servo conditions set therein. Finally, the identification information of the optical disc 50 is transmitted to a controller 5 of the disc drive.

In operation 82, a reference signal area, which is defined on the optical disc 50, is accessed. Such a reference signal area may be provided in the recordable zone 54 of a lead-in area 51 of the single recording layered optical recording medium 50, as shown in FIG. 5, or alternatively, in a lead-in area 60 or a lead-out area 67 of the double recording layered optical recording medium 50, as shown in FIG. 6. Moreover, such a reference signal area may also be arranged in a middle area on each recording layer of an optical recording medium having one or more recording layers. In the reference signal area, reference signals may have been recorded under optimum recording conditions determined according to example embodiments of the present invention. The reference signals may be read out from the reference signal area in the same manner as the identification information of the optical disc 50 are read out from the lead-in area.

When the reference signal area is accessed, the focusing or tracking operation of the optical head 71 is controlled according to the predetermined servo conditions set in the servo controller 73. The reproduce signal obtained from the laser beam reflected from the optical disc 50 is amplified by the amplifier 74, and the frequency characteristics of the amplified reproduce signal are modified by the equalizer 75, in which the predetermined equalization conditions are set. The modification result output from the equalizer 75 is converted into a binary signal by the binary circuit 76, in which the predetermined binary slice level is set. The binary signal is demodulated and then is supplied to the controller 5. In operation 83, the controller 5 determines whether reference signals are recorded in the reference signal area on the optical disc 50. Specifically, the controller 5 determines whether the reference signals are recorded in the reference signal area on the optical disc 50 based on a binary signal supplied thereto.

In operation 84, if no reference signals are recorded in the reference signal area on the optical disc 50, the controller 5 determines optimum recording/reproducing conditions for the optical disc 50 by test-recording data in a test area on the optical disc 50 under various sets of recording/reproducing conditions.

Following conditions previously set or designated by the identification information of the optical disc 50, a pulse condition setter 4 sets the predetermined pulse conditions in the pulse controller 79, a servo condition setter 1 sets the predetermined servo conditions in the servo controller 73, an equalization conditions setter 2 sets the predetermined equalization conditions in the equalizer 75, and a binary condition setter 3 sets the binary slice level in the binary circuit 76.

Test data, which is to be recorded in the test area on the optical disc 50, is output from the controller 5 and then is converted into a record signal by a modulator 78 of the disc drive. Similar to the reference signal area, the test area may be provided in the same recordable zone 54 of a lead-in area 51 of the single recording layered optical recording medium 50, as shown in FIG. 5, or alternatively, simply in a lead-in area 60 or a lead-out area 67 of the double recording layered optical recording medium 50, as shown in FIG. 6. Thereafter, the record signal is converted into a laser driving signal that satisfies the predetermined pulse conditions set in the pulse controller 79. A laser diode driver 72 of the disc drive drives a laser diode of the optical head 71 based on the laser driving signal. The optical head 71 whose focusing and tracking operations are controlled by the servo controller 73 records data in the test area on the optical disc 50 in such a manner that leaves a mark in the test area on the optical disc 50 by focusing a laser beam emitted from the laser diode on the test area.

A reproduce signal obtained from the test data is amplified by the amplifier 74. Thereafter, the frequency characteristics of the amplified reproduce signal are modified by the equalizer 75. Thereafter, the modification result output from the equalizer 75 is converted into a binary signal. Thereafter, a jitter level of the binary signal is measured by the controller 5. The measured jitter level is compared with a predetermined reference value. If the measured jitter level satisfies predetermined conditions, recording/reproducing conditions, under which the test data was recorded/reproduced on/from the test area, are determined as optimum recording/reproducing conditions for the optical disc 50. Otherwise, the pulse conditions, servo conditions, equalization conditions, and binary slice level are sequentially changed, the test data is recorded again in the test area, and a jitter value of the test data is measured. These processes are repeatedly performed until a jitter level of the test data satisfying the predetermined conditions is obtained.

In operation 85, reference signals are recorded in the reference signal area on the optical disc 50 under the optimum recording conditions determined in operation 84.

Specifically, the optimum recording conditions are set in a condition setting unit of the disc drive, which is comprised of the pulse condition setter 4, the servo condition setter 1, the equalization conditions setter 2, and the binary condition setter 3. In other words, the pulse condition setter 4 sets optimum pulse conditions in the pulse controller 79 with reference to the optimum recording conditions, the servo condition setter 1 sets optimum servo conditions in the servo controller 73 referencing the optimum recording conditions, the equalization conditions setter 2 sets optimum equalization conditions in the equalizer 75 with reference to the optimum recording conditions, the binary condition setter 3 sets an optimum binary slice level in the binary circuit 76 with reference to the optimum recording conditions.

Reference signals, which are to be recorded in the reference signal area on the optical disc 50, are output from the controller 5, and then are converted into a record signal by the modulator 78. Thereafter, the record signal is converted into a laser driving signal that satisfies the optimum pulse conditions set in the pulse controller 79. The reference signals are preferably, but not necessarily, recorded in the reference signal area in a random pattern. However, for a specific purpose, such as measurement of the degree of modulation of the amplitude of the reference signals, the reference signals may also be recorded in the reference signal area in a unique pattern. For example, in the case of RLL (1-7) modulation, the reference signals may be recorded in the reference signal area only using 2T and 8T.

A laser diode driver 72 records the reference signals in the reference signal area on the optical disc 50 in such a manner that leaves a mark in the reference signal area by driving the laser diode of the optical head 71 based on the laser driving signal.

In operation 86, user data is recorded in a user data area on the optical disc 50 under the optimum recording conditions determined in operation 84, or alternatively, is reproduced from the user data area under the optimum reproducing conditions determined in operation 84.

In operation 87, if reference signals turn out in operation 83 to have already been recorded in the reference signal area, the reference signals are reproduced from the reference signal area, and then the optimum recording/reproducing conditions are determined based on the reference signals.

In operation 86, the user data is recorded in the user data area on the optical disc 50 under the optimum recording conditions determined in operation 87, or alternatively, is reproduced from the user data area under the optimum reproducing conditions determined in operation 87.

As described from the foregoing, embodiments of the present invention advantageously provide several techniques in which optimum recording/reproducing conditions of an optical recording medium are determined in advance so as to reduce the amount of time required by an apparatus for recording/reproducing data on/from an optical recording medium, such as a disc drive, to record/reproduce data on/from such an optical recording medium. Once reference signals are recorded in a predetermined portion of a lead-in or lead-out area or a middle area of an optical recording medium, when the optical recording medium is loaded in a disc drive for the first time, it is now possible to quickly determine optimum recording/reproducing conditions for the optical recording medium later on without the need to additionally perform optimum power control (OPC). Moreover, even in the case of reproducing data from the optical recording medium, it is also possible to perform equalization gain or frequency control or optimum focusing control based on the reference signals recorded on the optical recording medium.

While there have been illustrated and described what are considered to be example embodiments of the present invention, it will be understood by those skilled in the art and as technology develops that various changes and modification may be made, and equivalents may be substituted for elements thereof without departing from the spirit and scope of the present invention. Many modifications may be made to adapt the teachings of the present invention to a particular situation without departing from the scope thereof. For example, other computer readable media, such as blu-ray (BD) discs or holographic data storage devices, may be utilized, as long as reference signals are recorded thereon to reflect optimum recording conditions. In addition, such reference signals can be recorded in any designated area of an optical recording medium, including, but not limited to, a predetermined portion of a lead-in or lead-out area or a middle area of an optical recording medium. Similarly, the CPU can be implemented as a chipset having firmware, or alternatively, a general or special purposed computer programmed to perform the methods as described with reference to FIG. 7 and FIG. 8. Accordingly, it is intended, therefore, that the present invention not be limited to the various example embodiments disclosed, but that the present invention includes all embodiments falling within the scope of the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical recording medium (50) comprising:
a data area (52); and
a reference signal area (56), in which reference signals are recorded based on optimum recording conditions determined for optimally recording/reproducing data on/from the data area of the optical recording medium.

2. The optical recording medium as claimed claim 1, wherein the reference signals satisfy predetermined amplitude modulation conditions.

3. The optical recording medium as claimed claim 1 or 2, wherein the reference signals satisfy predetermined jitter conditions.

4. The optical recording medium as claimed in any preceding claim, wherein the reference signal area is arranged in a recordable area of a lead-in area (51) or a lead-out area (53), on either side of the data area (52), on the optical recording medium.

5. The optical recording medium as claimed in any preceding claim, further comprising:
one or more recording layers (L0, L1),
wherein the reference signal area (64) is arranged on each of the recording layers, and the reference signals are recorded in the reference signal area on each of the recording layers based on optimum recording conditions determined for a corresponding recording layer.

6. The optical recording medium as claimed in any preceding claim, wherein the reference signals are recorded on the optical recording medium by an apparatus for recording/reproducing data on/from an optical recording medium, in which the optical recording medium is loaded for the first time.

7. A method of recording data on an optical recording medium (50), comprising:
recording reference signals in a recordable area (56) of the optical recording medium based on optimum recording conditions determined for optimally recording/reproducing data on/from the optical recording medium.

8. The method as claimed in claim 7, wherein, during the recording of the reference signals, the reference signals satisfy predetermined amplitude modulation conditions.

9. The method as claimed in claim 7 or 8, wherein, during the recording of the reference signals, the reference signals satisfy predetermined jitter conditions.

10. The method as claimed in any of claims 7-9, wherein, during the recording of the reference signals, the reference signal area (56) is defined in a recordable area of a lead-in area (51) or a lead-out area (53), on either side of a data area (52), on the optical recording medium.

11. The method as claimed in any of claims 7-10, wherein, during the recording of the reference signals, if the optical recording medium comprises one or more recording layers (L0, L1), the reference signals are recorded on each of the recording layers based on optimum recording conditions determined for a corresponding recording layer.

12. The method as claimed in any of claims 7-11, wherein the reference signals are recorded on the optical recording medium by an apparatus for recording/reproducing data on/from an optical recording medium, in which the optical recording medium is loaded for the first time in the apparatus.

13. A method of recording/reproducing data on/from an optical recording medium (50), comprising:
reading (82) reference signals from a reference signal area (56) defined on an optical recording medium (50), the reference signals being recorded in the reference signal area based on optimum recording conditions determined for optimally recording/reproducing data on/from the optical recording medium;
determining (87) the optimum recording/reproducing conditions for the optimum recording medium based on the read reference signals; and
recording/reproducing (86) data on/from the optical recording medium under the determined optimum recording/reproducing conditions.

14. The method as claimed in claim 13, wherein, if the optical recording medium comprises one or more recording layers (L0, L1), the reference signals are read from a reference signal area (56) defined on each of the recording layers, optimum recording/reproducing conditions for each of the recording layers are determined based on the reference signals read out from a corresponding recording layer, and data is recorded/reproduced on/from each of the recording layers under the optimum recording/reproducing conditions for the corresponding recording layer.

15. The method as claimed in claim 13 or 14, wherein the reference signal area is provided in one of a lead-in area (51) and a lead-out area (53) arranged at either side of a data area (52), on the optical recording medium.

16. The method as claimed in claim 15, wherein the reference signals are recorded in the reference signal area in one of a random pattern and a unique pattern, satisfying predetermined amplitude modulation conditions and/or predetermined jitter conditions.

17. The method as claimed in any of claims 13-16, wherein the optimum recording/reproducing conditions for the optical recording medium are obtained by test recording test data in a test area on the optical recording medium under a set of recording/reproducing conditions.

18. A method of recording/reproducing data on/from an optical recording medium (50), comprising:
Determining (83) whether reference signals are recorded in a reference signal area (56) arranged on an optical recording medium;
recording (85) reference signals in the reference signal area under optimum recording/reproducing conditions determined for optimally recording/reproducing data on/from the optical recording medium, if no reference signals are recorded in the reference signal area; and
reading the reference signals from the reference signal area, determining the optimum recording/reproducing conditions for the optical recording medium based on the reference signals, and recording/reproducing (86) data on/from the optical recording medium under the determined optimum recording/reproducing conditions, if the reference signals are recorded in the reference signal area.

19. The method as claimed in claim 18, wherein the reference signal area is provided in one of a lead-in area (51) and a lead-out area (53) arranged at either side of a data area (52), on the optical recording medium.

20. The method as claimed in claim 19, wherein the reference signals are recorded in the reference signal area in one of a random pattern and a unique pattern, satisfying predetermined amplitude modulation conditions and/or predetermined jitter conditions.

21. The method as claimed in any of claims 18-20, wherein, if no reference signals are recorded in the reference signal area, the optimum recording/reproducing conditions for the optical recording medium are obtained by test recording test data in a test area on the optical recording medium under a set of recording/reproducing conditions, before the reference signals are recorded in the reference signal area.

22. An apparatus for recording data on an optical recording medium (50), comprising:
a writer (71) which records data on the optical recording medium; and
a controller (5) which controls the writer to record reference signals in a recordable area (56) of the optical recording medium under optimum recording conditions determined for optimally recording/reproducing data on/from the optical recording medium.

23. The apparatus as claimed in claim 22, wherein the controller (5) controls the writer (71) to record the reference signals satisfying predetermined amplitude modulation conditions in the recordable area of the optical recording medium.

24. The apparatus as claimed in claim 22 or 23, wherein the controller (5) controls the writer (71) to record the reference signals satisfying predetermined jitter conditions in the recordable area of the optical recording medium.

25. The apparatus as claimed in any of claims 22-24, wherein the controller (5) controls the writer (71) to record the reference signals in a recordable area of a lead-in or lead-out area, on either side of a data area, defined on the optical recording medium.

26. The apparatus as claimed in any of claims 22-25, wherein, if the optical recording medium (50) is comprised of one or more recording layers (L0, L1), the controller (5) controls the writer (71) to record the reference signals on each of the recording layers under optimum recording conditions determined for a corresponding recording layer.

27. An apparatus for recording/reproducing data on/from an optical recording medium (50), comprising:
a reader/writer unit (71) which records/reproduces data on/from the optical recording medium; and
a controller (5) which controls the reader/writer unit to read reference signals from a recordable area (56) of the optical recording medium, to determine optimum recording/reproducing conditions for the optical recording medium based on the read reference signals, and to record/reproduce data on/from the optical recording medium under the determined optimum recording/reproducing conditions.

28. The apparatus as claimed in claim 27, wherein, if the optical recording medium is comprised of one or more recording layers (L0, L1), the controller controls the reader/writer unit to read the reference signals from a reference signal area arranged on each of the recording layers, to determine optimum recording/reproducing conditions determined for a corresponding recording layer, and to record/reproduce data on/from the corresponding recording layer under the determined optimum recording/reproducing conditions.

29. An apparatus for recording/reproducing data on/from an optical recording medium (50), comprising:
a reader/writer unit (71) which records/reproduces data on/from the optical recording medium; and
a controller (5) which determines whether reference signals are recorded in a reference signal area defined on an optical recording medium,
wherein the controller controls the reader/writer unit to record the reference signals in the reference signal area under optimum recording/reproducing conditions determined for the optical recording medium, if no reference signals are recorded in the reference signal area, and determines the optimum recording/reproducing conditions for the optical recording medium based on the reference signals read out from the reference signal area, and
wherein the controller controls the reader/writer unit to record/reproduce data on/from the optical recording medium under the determined optimum recording/reproducing conditions, if reference signals are recorded in the reference signal area.

30. The apparatus as claimed in claim 29, wherein the reference signal area (56) is provided in one of a lead-in area (51) and a lead-out area (52) arranged at either side of a data area (52), on the optical recording medium.

31. The apparatus as claimed in claim 30, wherein the reference signals are recorded in the reference signal area in one of a random pattern and a unique pattern, satisfying predetermined amplitude modulation conditions and/or predetermined jitter conditions.

32. The apparatus as claimed in claim 29 or 30, wherein, if no reference signals are recorded in the reference signal area, the controller controls the read/writer to obtain optimum recording/reproducing conditions for the optical recording medium, via test recording test data in a test area on the optical recording medium under a set of recording/reproducing conditions, before recording the reference signals in the reference signal area on the optical recording medium.

33. A system performing recording/reproducing to/from a storage medium (50) having a data area (52) and a reference signal area (56) comprising:
a disc drive arranged to determine whether reference signals are recorded in the reference signal area defined on the storage medium, and, if the reference signals are recorded in the reference signal area, determine optimum recording/reproducing conditions based on the reference signals and then record/reproduce data on/from the data area on the storage medium under determined optimum recording/reproducing conditions.

34. The system as claimed in claim 33, wherein, if the reference signals are not recorded in the reference signal area defined on the storage medium, the disk drive is further arranged to determine optimum recording/reproducing conditions by test recording test data in a test area on the optical recording medium under a set of recording/reproducing conditions, and to record reference signals in the reference signal area on the optical recording medium under determined optimum recording/reproducing conditions, prior to recording/reproducing data on/from the data area on the storage medium.

35. The system as claimed in claim 33 or 34, wherein the reference signal area (56) is provided in one of a lead-in area (51) and a lead-out area (53) arranged at either side of the data area (52), on the storage medium.

36. The system as claimed in any of claims 33-35, wherein the reference signals are recorded in the reference signal area in one of a random pattern and a unique pattern, satisfying predetermined amplitude modulation conditions and/or predetermined jitter conditions.
